# EUROPEAN PATENT APPLICATION

(11) **EP 4 495 714 A1**
(43) Date of publication of application: **22.01.2025**
(21) Application number: 24185335.7
(22) Date of filing: 28.06.2024
(51) Int. Cl.: G05B 13/04, C01B 3/04

(54) **SYSTEM AND METHOD FOR OPTIMIZING FLOW OF AMMONIA, AND COMPUTER-READABLE MEDIUM**

(30) Priority: 21.07.2023 KR 20230095393
(71) Applicant: SK Innovation Co., Ltd., Seoul 03188 (KR)
(72) Inventor: BAE, Sun Hyuk, 34124 Daejeon (KR); KIM, Jae Jeong, 34124 Daejeon (KR); PARK, Chan Saem, 34124 Daejeon (KR)
(74) Representative: Prüfer & Partner mbB Patentanwälte · Rechtsanwälte

(57) **Abstract**

Disclosed are a system and a method for optimizing a gas flow of ammonia in an industrial plant. The system according to the present disclosure may include: a physical plant; a digital twin model for the physical plant; a data collection module configured to acquire real-time data from the physical plant; a simulation module configured to simulate at least one scenario using the digital twin model and identify optimal operating conditions for the gas flow of ammonia based on simulation results; a feedback loop between the digital twin model and the physical plant to adjust the physical plant based on the simulation results; and a performance monitoring module configured to monitor performance of the physical plant to track effectiveness of the optimization process.

## Description

### [BACKGROUND OF THE INVENTION]

### 1. Field of the Invention

The present disclosure relates to a system and a method for optimizing a flow of ammonia. It further relates to a computer-readable medium.

### 2. Description of the Related Art

Recently, as various environmental problems are becoming a major issue throughout the world, demand for the introduction of eco-friendly alternative energy instead of existing internal combustion engines not only for general vehicles but also for heavy equipment such as an excavator is increasing. Thereby, a fuel cell system which uses fuel cells (FCs) as a power source has been in the spotlight.

In order to ensure smooth operation and high performance of the fuel cell system, the role of an Energy Management System (EMS) is important to appropriately determine how to distribute power demands between the power sources. To this end, stable and reliable operation of the EMS is required.

In a situation where a plurality of pipes exist, when the flow rate is concentrated in a specific pipe, it is necessary to equalize the flow rate by automatically reducing the flow rate of the corresponding pipe. It is difficult to describe the complex interaction between different components of the system by conventional methods. To solve this problem, digital twins (DTs) are being developed for providing accurate a real-time simulation of entire physical system.

### [SUMMARY OF THE INVENTION]

According to one aspect of the present disclosure, it is an object to provide a system and a method for controlling a flow rate of a gas such as ammonia flowing in a specific pipe in an industrial plant, in which the flow rate is concentrated, among a plurality of pipes.

In addition, according to one aspect of the present disclosure, it is another object to provide a system and a method for optimizing a flow of ammonia using digital twin technologies.

To achieve the above objects, according to an aspect of the present invention, there is provided a system for optimizing a gas flow of ammonia in an industrial plant, the system including: a physical plant; a digital twin model for the physical plant; a data collection module configured to acquire real-time data from the physical plant; a simulation module configured to simulate at least one scenario using the digital twin model and identify optimal operating conditions for the gas flow of ammonia based on simulation results; a feedback loop between the digital twin model and the physical plant to adjust the physical plant based on the simulation results; and a performance monitoring module configured to monitor performance of the physical plant to track effectiveness of the optimization process.

According to an embodiment, the physical plant may include pipes, valves, pumps, and sensors.

According to an embodiment, the data collection module is configured to collect the real-time data including at least one of temperature, pressure, flow rate, pump speed, pipe characteristics, and valve position from the sensors.

According to an embodiment, the simulation module is configured to minimize an energy consumption of the system by adjusting operating conditions including at least one of the valve position, the pump speed, and the pipe characteristics, and maximize a throughput processed in the system.

According to an embodiment, the feedback loop is configured to adjust at least one of pipes, valves, pumps, and sensors included in the physical plant in real time based on the simulation results.

According to an embodiment, the performance monitoring module is configured to continuously monitor the performance of the physical plant and the digital twin model to determine whether the performances of the physical plant and the digital twin model satisfy preset targets.

According to an embodiment, the system may further include an update module configured to continuously update parameter settings of the physical plant based on the real-time data of the physical plant.

According to an embodiment, the system may further include a feedback module configured to adjust the physical plant in response to optimized settings identified by the digital twin model.

According to an embodiment, the simulation module may be configured to: collect an input indicating an energy amount required by the system and an output of the physical plant from the digital twin model; collect a flow rate of the feed for a reforming reaction, a flow rate of the feed for a combustion reaction, and information on specific activity of catalysts in each reaction unit where the reforming reaction and combustion reaction occur from the digital twin model; and adjust, as an optimized scenario, an opening ratio of a flow rate control valve for each feed based on the collected information.

According to another aspect of the present invention, there is provided a method for optimizing a gas flow of ammonia in an industrial plant, the method including: obtaining real-time data from a physical plant; simulating at least one scenario using a digital twin model for the physical plant; identifying optimal operating conditions for the gas flow of ammonia based on simulation results; implementing a feedback loop between the digital twin model and the physical plant to adjust the physical plant based on the simulation results; and monitoring performance of the physical plant to track the effectiveness of the optimization process.

According to another aspect of the present invention, the following data are collected: an input indicating the energy amount required by the system, an output of the physical plant, a flow rate of the feed for a reforming reaction, a flow rate of the feed for a combustion reaction, and information on the specific activity of the catalysts in each reaction unit where the reforming reaction and combustion reaction occur.

According to another aspect of the present invention, operating conditions include a valve position, a pump speed, and pipe characteristics, wherein the valve, the pump and the pipe are included in an industrial plant.

According to another aspect of the present invention, the feedback loop further regulates at least one of a pipe, a valve, a pump, and a sensor included in the physical plant 110 in real time.

According to another aspect of the present invention, the performance of the physical plant) and the digital twin model are continuously monitored to track the effectiveness of the optimization process in order to confirm whether the performances of the physical plant and the digital twin model satisfy the targets.

According to another aspect of the present invention, a computer-readable medium, is provided, which stores instructions in the form of program code, which, when executed by a processor, is configured to generate a program module to perform operations for controlling a flow rate of ammonia flowing in a specific pipe of an industrial plant, in which the flow rate is concentrated, among a plurality of pipes.

According to an embodiment of the present disclosure, by optimizing the flow of gas such as ammonia, there are effects of improving effectiveness of the entire process, such as maximizing the throughput of ammonia, minimizing energy consumption, and identifying optimal operating conditions.

In addition, according to an embodiment of the present disclosure, by optimizing the flow of gas, there are effects of improving the environmental impact, such as preventing the emission of harmful emissions.

In addition, according to an embodiment of the present disclosure, by preventing potential system errors or malfunctions in the physical plant, reliability of the system may be improved.

Further, according to an embodiment of the present disclosure, by providing real-time responses to changing conditions through the feedback loop between the digital twin model and the physical plant, there are effects of quickly performing the control operation, adjustment operation, regulation operation and the like.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a block diagram for describing a system according to an embodiment of the present disclosure;
FIG. 2 is a relationship diagram between a plant and a digital twin model according to an embodiment of the present disclosure; and
FIG. 3 is a flow chart illustrating procedures of a method according to an embodiment of the present disclosure.

### [DETAILED DESCRIPTION OF THE INVENTION]

Hereinafter, the present disclosure will be described in detail through embodiments with reference to the accompanying drawings. However, the embodiments are merely illustrative and the present disclosure is not limited to the specific embodiments described by way of example.

The same reference numerals are denoted to the same components throughout the present disclosure. The present disclosure does not describe all elements of the embodiments, and general contents in the technical field to which the present disclosure pertains or overlapping contents between the embodiments will not be described. The terms `unit, module, member and block' used herein may be implemented as software or hardware, and depending on the embodiments, a plurality of `units, modules, members and blocks' may be implemented as one component, or one *'*part, module, member, or block*'* may include a plurality of components.

Throughout the specification, when the explanatory phrase a part is "connected" to another part is used, this includes not only the case where the part is "directly connected" to the other part, but also the case where the part is "indirectly connected" to the other part, and the indirect connection includes connection through a wireless communication network.

In addition, when the explanatory phrase a part "comprises or includes" a component is used, this means that the part may further include the component without excluding other components, unless there is a description opposite thereto.

Throughout the specification, when the explanatory phrase a member is located "on" another member is used, this includes not only the case where the member is in contact with the other member, but also the case where another member exists between the two members.

Terms such as first and second, etc. are used to distinguish one component from another component, and the components are not limited by the above-described terms.

The singular forms "a," "an" and "the" are intended to include the plural forms as well, unless the context clearly indicates otherwise.

The identification numerals for each step is used for the convenience of description. The identification numerals do not describe the order of each step, and each step may be performed differently from the specified order unless a specific order is clearly described in the context.

In this specification, the *'*device according to the present disclosure' includes all various devices that may perform computational processing and provide results thereof to a user. For example, the device according to the present disclosure may include all of a computer, a server device and a portable terminal, or may be any form thereof.

Here, the computer may include, for example, a laptop or desktop computer, laptop PC, tablet PC, slate PC, and the like equipped with a web browser.

The server device is a server that processes information by performing communication with an external device, and may include an application server, computing server, database server, file server, game server, mail server, proxy server and web server.

The portable terminal is, for example, a wireless communication device with which portability and mobility are assured, and may include: all types of handheld wireless communication devices such as a personal communication system (PCS), global system for mobile communications (GSM), personal digital cellular (PDC), personal handy phone system (PHS), personal digital assistant (PDA), international mobile telecommunication (IMT)-2000, code division multiple access (CDMA)-2000, wideband code division multiple access (W-CDMA), wireless broadband internet (WiBro) terminal, and smart phone, etc.; and wearable devices such as a watch, ring, bracelet, anklet, necklace, glasses, contact lenses, and head-mounted-device (HMD), etc.

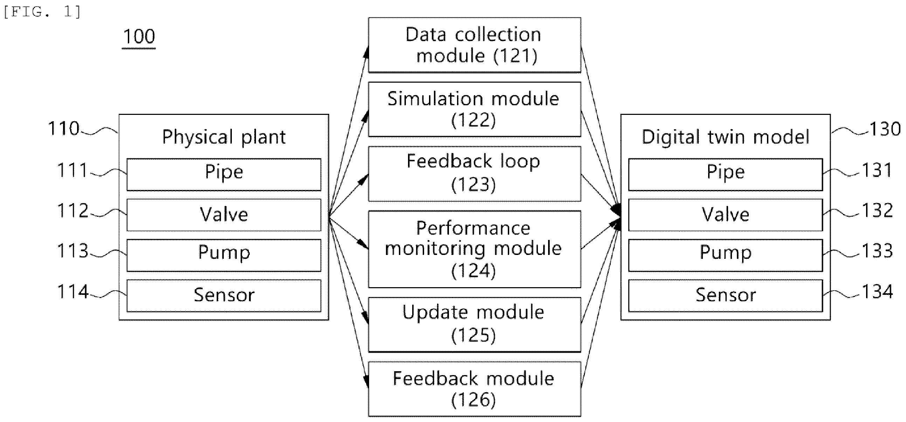

FIG. 1 is a block diagram for describing a system according to an embodiment of the present disclosure.

Referring to FIG. 1, a system 100 may optimize the gas flow of ammonia in an industrial plant. The system 100 may include a physical plant 110, a data collection module 121, a simulation module 122, a feedback loop 123, a performance monitoring module 124, an update module 125, a feedback module 126, and a digital twin model 130.

The physical plant 110 may include, for example, pipes 111, valves 112, pumps 113, and sensors 114.

The data collection module 121 may acquire real-time data from the physical plant 110. The data collection module 121 may acquire real-time data about various environments from the sensors 114 included in the physical plant 110. The real-time data may include, for example, at least one of temperature, pressure, flow rate, pump speed, pipe characteristics, and valve position of the valves of the physical plant 110.

The simulation module 122 may simulate at least one scenario using the digital twin model 130. Further, the simulation module 122 may identify optimal operating conditions for the gas flow of ammonia based on the simulation results.

The simulation module 122 may minimize an energy consumption of the system 100 by adjusting operating conditions including at least one of the valve position, the pump speed, and the pipe characteristics. In addition, the simulation module 122 may maximize a throughput processed by the system 100.

The simulation module 122 may collect an input indicating an energy amount required by the system 100 and an output of the physical plant 110 from the digital twin model 130. In addition, the simulation module 122 may collect the feed flow rate for a reforming reaction ("reforming reaction feed"), the flow rate of a feed for a combustion reaction ("combustion reaction feed"), and information on specific activity of catalysts in each reaction unit where the reforming reaction and combustion reaction occur from the digital twin model 130. Further, the simulation module 122 may adjust, as an optimized scenario, an opening ratio of a flow rate control valve for each feed based on the collected information. For example, when an x data value is greater than a y data value, the opening rate may be adjusted by z.

The feedback loop 123 may implement a feedback loop between the digital twin model 130 and the physical plant 110 to adjust the physical plant 110 based on the simulation results of the simulation module 122.

The feedback loop 123 may adjust at least one of the pipe 111, the valve 112, the pump 113, and the sensor 114 included in the physical plant 110 in real time based on the simulation results of the simulation module 122.

The performance monitoring module 124 may monitor the performance of the physical plant 110 to track the effectiveness of the optimization process.

The performance monitoring module 124 may continuously monitor the performance of the physical plant 110 and the digital twin model 130 to determine whether the performances of the physical plant 110 and the digital twin model 130 satisfy preset targets.

The update module 125 may continuously update parameter settings of the physical plant based on the real-time data of the physical plant 110 to ensure validity.

The feedback module 126 may adjust the physical plant 110 in response to at least one optimized setting identified by the digital twin model 130.

The digital twin model 130 is a digital model for the physical plant 110. In other words, the digital twin model 130 simulates the physical plant 110. The digital twin model 130 may include, for example, pipes, valves, pumps, and sensors which correspond to the pipes 131, valves 132, pumps 133, and sensors 134 of the physical plant.

According to the above description, by optimizing the flow of gas such as ammonia, there are effects of improving effectiveness of the entire process, such as maximizing the throughput of ammonia, minimizing energy consumption, and identifying optimal operating conditions.

In addition, according to the above description, by optimizing the flow of gas, there are effects of improving the environmental impact, such as preventing the emission of harmful emissions.

In addition, according to the above description, by preventing potential system errors or malfunctions in the physical plant, reliability of the system may be improved.

In addition, according to the above description, by providing real-time responses to changing conditions through the feedback loop between the digital twin model and the physical plant, there are effects of quickly perform the control operation, adjustment operation, regulation operation and the like.

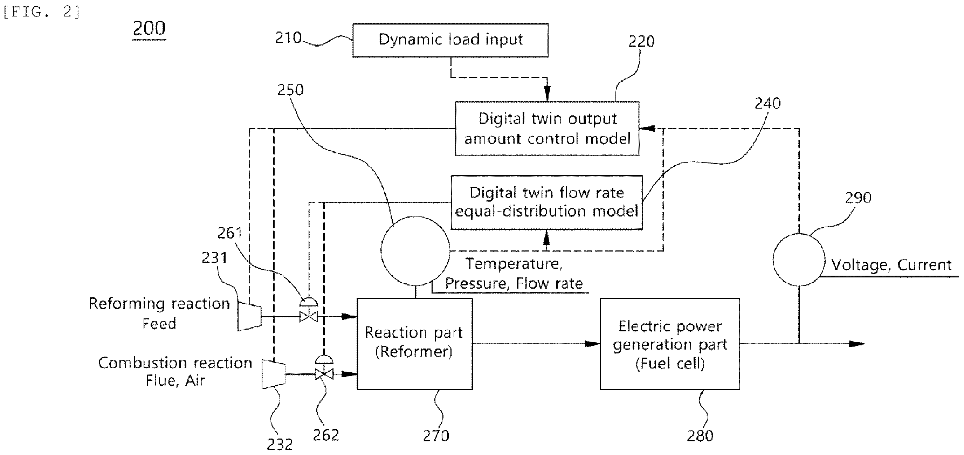

FIG. 2 is a relationship diagram between a plant and a digital twin model according to an embodiment of the present disclosure.

Referring to FIG. 2, a relationship diagram 200 may include a dynamic load input 210, a digital twin output amount control model 220, first and second blowers 231 and 232, a digital twin flow rate equal-distribution model 240, first information 250, first and second control valves 261 and 262, a reformer 270, a fuel cell 280, and second information 290.

The dynamic load input 210, the first information 250, and the second information 290 may be inputs entered into the digital twin output amount control model 220. The first information 250 may include, for example, temperature, pressure, flow rate and the like. The second information 290 may include, for example, voltage, current and the like.

The digital twin output amount control model 220 may transmit an output value to the first and second blowers 231 and 232.

The reforming reaction feed may be fed into the first blower 231. Combustion reaction fuel and air may be fed into the second blower 232 as a feed.

The second information 290 may be transmitted as input into the digital twin flow rate equal-distribution model 240. The digital twin flow rate equal-distribution model 240 may transmit an output value to the first and second control valves 261 and 262. The reforming reaction feed may be fed into the reformer 270 through the first control valve 261. The combustion reaction fuel and air may be fed into the reformer 270 through the second blower 232.

A reaction may occur in the reformer 270. An electric power may be generated by the fuel cell 280.

For the optimized scenario described above with reference to FIG. 1, an input indicating the required energy amount, for example, the dynamic load input 210, may be collected in the digital twin output amount control model 220. The input indicating the required energy amount may include various parameters included, for example, in a graph indicating the energy amount required for decelerating or accelerating a vehicle, a graph indicating a change in the power consumption of a distributed power generation system by time and the like. In addition, the electric power output of fuel cells sensed from the physical plant may be collected in the digital twin output amount control model 220. The flow rate of the feed for a reforming reaction occurring in the reformer 270, for example, the reforming reaction feed, may be collected in the digital twin flow rate equal-distribution model 240. The flow rate of feed for a combustion reaction, for example, the combustion reaction fuel and air, may be collected in the digital twin flow rate equal-distribution model 240. The information on the specific activity of the catalysts in each reaction unit where the reforming reaction and combustion reaction occur may be collected in the digital twin flow rate equal-distribution model 240. The specific activity of the catalyst may be obtained by measuring the temperature, composition, and flow rate of a reforming reaction product and the combustion flue gas, and calculating a conversion rate and selectivity. The opening rate of the flow rate control valve for each feed may be adjusted based on the collected information. In this case, the higher the specific activity of the catalyst, the less feed may be injected.

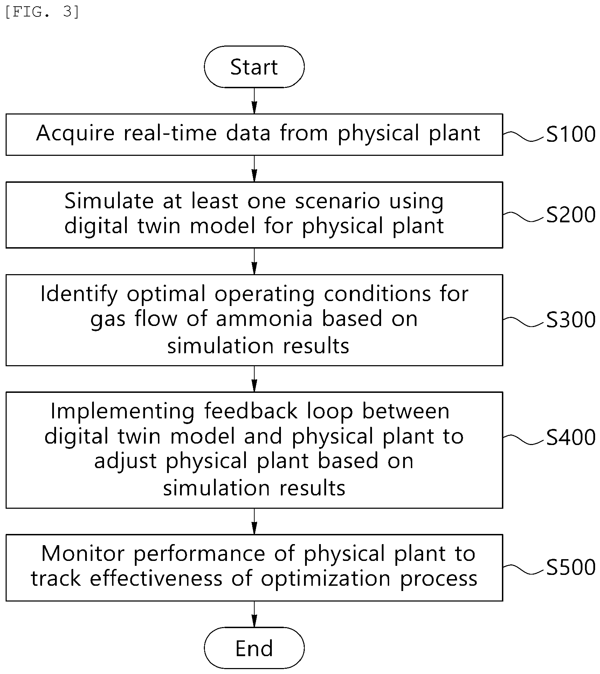

FIG. 3 is a flow chart illustrating procedures of a method according to an embodiment of the present disclosure.

Referring to FIG. 3, the method according to an embodiment of the present disclosure may optimize the gas flow of ammonia in an industrial plant.

First, a step of acquiring real-time data from the physical plant is performed (S100).

Then, a step of simulating at least one scenario using a digital twin model for the physical plant is performed (S200).

Next, a step of identifying optimal operating conditions for the gas flow of ammonia is performed based on the simulation results (S300).

When exemplifying in relation to the step S200 and step S300 with reference to FIG. 1, the simulation module 122 may simulate at least one scenario using the digital twin model 130 and identify optimal operating conditions for the gas flow of ammonia based on the simulation results. Here, the operating conditions may include, for example, the valve position, pump speed, and pipe characteristics. The simulation module 122 may collect an input indicating the energy amount required by the system 100, an output of the physical plant 110, a flow rate of the feed for a reforming reaction, a flow rate of the feed for a combustion reaction, and information on the specific activity of the catalysts in each reaction unit where the reforming reaction and combustion reaction occur in the digital twin model 130. In addition, the simulation module 122 may adjust an opening rate of the flow rate control valve for the feed based on the collected information.

Then, a step of implementing a feedback loop between the digital twin model and the physical plant to adjust the physical plant is performed based on the simulation results (S400).

When exemplifying in relation to the step S400 with reference to FIG. 1, the feedback loop 123 may implement a feedback loop between the digital twin model 130 and the physical plant 110 to adjust the physical plant 110 based on the simulation results of the simulation module 122, and regulate at least one of the pipe 111, the valve 112, the pump 113, and the sensor 114 included in the physical plant 110 in real time.

Finally, a step of monitoring the performance of the physical plant to track the effectiveness of the optimization process is performed (S500).

When exemplifying in relation to the step S500 with reference to FIG. 1, the performance monitoring module 124 may continuously monitor the performance of the physical plant 110 and the digital twin model 130 to track the effectiveness of the optimization process, such that it can be confirmed whether the performances of the physical plant 110 and the digital twin model 130 satisfy the preset targets.

Meanwhile, the disclosed embodiments may be implemented in the form of a recording medium which stores instructions executable by a computer. The instructions may be stored in the form of program code, and when executed by the processor, may generate a program module to perform operations of the disclosed embodiments. The recording medium may be implemented as a computer-readable recording medium.

The computer-readable recording medium may include all types of recording media in which instructions that can be decoded by the computer are stored. For example, there may be a read only memory (ROM), random access memory (RAM), magnetic tape, magnetic disk, flash memory, optical data storage device and the like.

As above, the disclosed embodiments have been described with reference to the accompanying drawings. It will be understood by persons skilled in the art to which the present disclosure pertains that the present disclosure may be embodied in forms different from the disclosed embodiments without changing the technical idea or essential features of the present disclosure. The disclosed embodiments are illustrative, and should not be interpreted as limiting.

## Claims

1. A system (100) for optimizing a gas flow of ammonia in an industrial plant, the system (100) comprising:
a physical plant (110);
a digital twin model (130) for the physical plant (110);
a data collection module (121) configured to acquire real-time data from the physical plant (110);
a simulation module (122) configured to simulate at least one scenario using the digital twin model (130) and to identify optimal operating conditions for the gas flow of ammonia based on simulation results;
a feedback loop (123) between the digital twin model (130) and the physical plant (110) to adjust the physical plant (110) based on the simulation results; and
a performance monitoring module (124) configured to monitor performance of the physical plant (110) to track the effectiveness of the optimization process.

2. The system according to claim 1, wherein the physical plant (110) comprises pipes, valves, pumps, and sensors (114, 134) .

3. The system according to claim 1 or 2, wherein the data collection module (121) is configured to collect the real-time data including at least one of temperature, pressure, flow rate, pump speed, pipe characteristics, and valve position from the sensors (114, 134).

4. The system according to any one of claims 1 to 3, wherein the simulation module (122) is configured to minimize an energy consumption of the system (100) by adjusting operating conditions including at least one of the valve position, the pump speed, and the pipe characteristics, and to maximize a throughput processed in the system (100).

5. The system according to any one of claims 1 to 4, wherein the feedback loop is configured to adjust at least one of pipes, valves, pumps, and sensors (114, 134) included in the physical plant (110) in real time based on the simulation results.

6. The system according to any one of claims 1 to 5, wherein the performance monitoring module (124) is configured to continuously monitor the performance of the physical plant (110) and the digital twin model (130) to determine whether the performances of the physical plant (110) and the digital twin model (130) satisfy preset targets.

7. The system according to any one of claims 1 to 6, further comprising an update module (125) configured to continuously update parameter settings of the physical plant (110) based on the real-time data of the physical plant (110).

8. The system according to any one of claims 1 to 7, further comprising a feedback module (126) configured to adjust the physical plant (110) in response to at least one optimized setting identified by the digital twin model (130).

9. The system according to any one of claims 1 to 8, wherein the simulation module (122) is configured to:
collect an input (210) indicating an energy amount required by the system (100) and an output of the physical plant (110) from the digital twin model (130);
collect a feed flow rate for a reforming reaction, a feed flow rate for a combustion reaction, and information on specific activity of catalysts in each reaction unit where the reforming reaction and combustion reaction occur from the digital twin model (130); and
adjust, as an optimized scenario, an opening ratio of a flow rate control valve for each feed based on the collected information.

10. A method for optimizing a gas flow of ammonia in an industrial plant, the method comprising:
obtaining real-time data from a physical plant (110);
simulating at least one scenario using a digital twin model (130) for the physical plant (110);
identifying optimal operating conditions for the gas flow of ammonia based on simulation results;
implementing a feedback loop (123) between the digital twin model (130) and the physical plant (110) to adjust the physical plant (110) based on the simulation results; and
monitoring performance of the physical plant (110) to track the effectiveness of the optimization process.

11. The method according to claim 10, wherein one or more of or all of the following data are collected: an input indicating the energy amount required by the system (100), an output of the physical plant (110), a flow rate of the feed for a reforming reaction, a flow rate of the feed for a combustion reaction, and information on the specific activity of the catalysts in each reaction unit where the reforming reaction and combustion reaction occur.

12. The method according to claim 10 or 11, wherein operating conditions include a valve position, a pump speed, and pipe characteristics.

13. The method according to one of claims 10 to 12, wherein the feedback loop further regulates at least one of a pipe (111), a valve (112), a pump (113), and a sensor (114) included in the physical plant (110) in real time.

14. The method according to one of claims 10 to 13, wherein the performance of the physical plant (110) and the digital twin model (130) are continuously monitored to track the effectiveness of the optimization process in order to confirm whether the performances of the physical plant (110) and the digital twin model (130) satisfy the targets.

15. Computer-readable medium, which stores instructions in the form of program code, which, when executed by a processor, is configured to generate a program module to perform operations for controlling a flow rate of ammonia flowing in a specific pipe of an industrial plant, in which the flow rate is concentrated, among a plurality of pipes; optionally wherein the computer-readable medium stores instructions in the form of a program code which, when executed by a processor, is configured to generate the program module to perform operations of the method of any one of claims 10 to 14.
